## Europäisches Patentamt
## European Patent Office
## Office européen des brevets

(19)

(11) Numéro de publication: **0 117 787**
**B1**

(12) # FASCICULE DE BREVET EUROPÉEN

(45) Date de publication du fascicule du brevet:
02.09.87

(51) Int. Cl.⁴: **G 01 N 27/90,** G 01 N 29/00

(21) Numéro de dépôt: **84400202.2**

(22) Date de dépôt: **30.01.84**

(54) Dispositif portable pour l'examen non destructif d'une surface le long d'une ligne.

(30) Priorité: **24.02.83 FR 8303044**

(43) Date de publication de la demande:
**05.09.84 Bulletin 84/36**

(45) Mention de la délivrance du brevet:
**02.09.87 Bulletin 87/36**

(84) Etats contractants désignés:
**DE GB IT NL**

(56) Documents cité:
**GB-A-2 015 740**
**US-A-3 585 851**
**US-A-3 898 555**
**US-A-4 170 145**
**US-A-4 304 133**

(73) Titulaire: **AEROSPATIALE Société Nationale Industrielle, 37, Boulevard de Montmorency, F-75781 Paris Cédex 16 (FR)**

(72) Inventeur: **Arnaud, Jean- Louis, 2 Square des Coquelicots, F-91760 Verrieres- Le- Buisson (FR)**
Inventeur: **Floret, Michel, 8, rue Marcelin Berthelot, F-92230 Gennevilliers (FR)**

(74) Mandataire: **Bonnetat, Christian, Cabinet PROPI Conseils 23 rue de Léningrad, F-75008 Paris (FR)**

LIBER, STOCKHOLM 1987

## Description

La présente invention concerne un dispositif portable pour l'examen non destructif d'une surface le long d'une ligne. Quoique ce dispositif puisse être utilisé dans de nombreuses applications telles que l'examen non destructif de soudures de tubes, de canalisations, etc..., la présente invention sera plus spécialement décrite ci-après en rapport avec l'examen non destructif des jonctions des panneaux constituant la peau du fuselage d'un aéronef.

On sait que la peau du fuselage d'un aéronef est constituée de panneaux individuels rivetés et que les bords longitudinaux de deux panneaux adjacents se chevauchent de façon étanche et sont assemblés au moyen de rivets ou analogues. De telles jonctions par rivets fatiguent beaucoup au cours de l'utilisation de l'aéronef, notamment du fait des cycles de compression et de decompression auxquels est soumis le fuselage de celui-ci. Il peut en résulter la formation de criques se développant à partir des trous de passage des rivets dans les panneaux et le décollement des bords de la jonction. Par suite, les jonctions s'affaiblissent et peuvent subir l'attaque de la corrosion. Il est donc indispensable de surveiller périodiquement lesdites jonctions afin de connaître leur état en ce qui concerne le développement des criques, le décollement de bords et les progrès de la corrosion.

Actuellement, l'examen non destructif des liaisons rivetées des aéronefs s'effectue généralement au moyen d'une sonde (à ultrasons le plus souvent) transmettant ses signaux à un moniteur de télévision et à un enregistreur, un opérateur déplaçant manuellement la sonde d'un rivet au suivant. Le centrage de la sonde par rapport au rivet est très important en ce qui concerne le résultat de l'examen, de sorte que l'opérateur doit y prêter une attention constante. Il en résulte que cet opérateur ne peut simultanément regarder l'écran de télévision et que des erreurs peuvent se produire. De plus, un tel examen est long et fastidieux, (le fuselage d'un aéronef gros porteur moderne comporte entre 40 000 et 50 000 rivets), ce qui favorise l'omission ou la duplication du controle de certains rivets. Enfin, les risques d'erreur sont accrus du fait de la difficulté des conditions de travail de l'opérateur: en effet, le fuselage d'un aéronef gros porteur est gigantesque et l'opérateur se trouve parfois à plus de dix mètres au-dessus du sol et parfois en dessous du fuselage.

Pour remédier à ces inconvénients des examens manuels, on pourrait songer à rendre ceux-ci automatiques, par exemple au moyen de guides qui seraient fixés de façon amovible le long des jonctions à surveiller et le long desquels se déplacerait ladite sonde, sous l'action de moteurs ou analogue. Cependant, l'exploitation de tels appareils automatiques serait difficile, sinon impossible du fait des variations de courbure que les lignes de jonction présentent sur leur longueur et des défauts de surface du fuselage le long desdites jonctions.

Par ailleurs, par le brevet US-A-4 170 145, on connaît déjà un dispositif portable pour l'examen non destructif d'une surface le long d'une ligne, au moyen d'au moins une sonde de détection déplaçable le long de ladite ligne et guidée par une tige de guidage rapportée sur ladite surface de façon amovible, ladite sonde étant montée dans un porte-sonde lié à ladite tige de guidage de façon rigide parallèlement à celle-ci et de façon lâche transversalement à ladite tige de guidage et des moyens étant prevus pour indiquer, à chaque instant d'un déplacement dudit porte-sonde, le long de ladite tige de guidage, la position dudit porte-sonde sur cette dernière, ledit dispositif comportant pour sa fixation amovible sur la surface des ventouses commandables manuellement, et lesdits moyens d'indication de la position du porte-sonde le long de la tige de guidage comportant un curseur susceptible de se déplacer librement le long de ladite tige de guidage et fournissant une grandeur électrique représentative de la position dudit curseur le long de la tige de guidage.

La présente invention a pour but de remédier aux inconvénients de la méthode manuelle rappelée ci-dessus et de rendre possible une automatisation partielle du processus d'examen non destructif en éliminant les difficultés d'un procédé entièrement automatique, grâce à la mise en oeuvre et au perfectionnement du dispositif décrit dans le document US-A-4 170 145. Quoique non nécessairement, le dispositif de la présente invention est particulièrement approprié à être utilisé avec la sonde décrite dans la demande de brevet EP-A-0 117 787 déposée le 30.01.84.

A cette fin, selon l'invention, le dispositif portable du type décrit dans ce document, est caractérisé en ce qu'au moins une ventouse est montée coulissante par rapport à ladite tige de guidage, de façon que l'on puisse deplacer ladite tige de guidage le long de ladite ligne, par rapprochements et écartements alternés desdites ventouses à la manière d'une chenille, et en ce que ledit porte-sonde est simplement emboîté sur ledit curseur, du fait que le porte-sonde est pourvu d'un évidement s'adaptant en longueur, aux frottements près, à la longueur du curseur, mais permettant l'appui en pivotement dudit porte-sonde sur ladite tige de guidage.

Ainsi, grâce à l'invention, on peut explorer la totalité de ladite ligne, tronçon par tronçon, par déplacements successifs dudit dispositif le long de celle-ci, séparés par des temps d'arrêt correspondant à l'examen d'un desdits tronçons, sans subir les inconvénients des variations de courbure de la ligne, puisque le long de chaque tronçon de telles variations sont négligeables. Par ailleurs, du fait du mode de liaison du porte-sonde avec le guide, la sonde peut être plus ou moins pressée manuellement en direction de la surface, de façon à pouvoir épouser les imperfections de celle-ci, tout en ayant une position parfaitement repérée le long dudit guide. De plus, le curseur peut être déplacé le long de la tige de guidage par l'intermédiaire du porte-sonde tenu en main par un opérateur.

Les moyens d'indication de position peuvent être de type potentiométrique. Cependant, ils sont avantageusement du type décrit dans le brevet américain US-A-3 898 555.

De préférence, ledit porte-sonde est constitué par une plaque rigide transparente pourvue d'un réticule de visée. Ainsi, il est possible de voir la ligne à examiner à travers ledit porte-sonde et de centrer la sonde par rapport à une zone d'observation (rivet par exemple) en visant avec le réticule une autre zone (autre rivet).

Grâce au dispositif conforme à l'invention, l'opérateur n'a pas à se préoccuper du positionnement de la sonde par rapport à la ligne à examiner. Par suite, son attention est disponible pour surveiller une image de cette ligne apparaissant sur un écran de contrôle. Aussi, selon une particularité de l'invention, le dispositif comporte un boîtier de contrôle, éventuellement en partie solidaire de ladite tige de guidage, pourvu de moyens de réglage et de lecture de ladite sonde et d'un microprocesseur, ledit boîtier de contrôle étant relié à un dispositif de visualisation portable destiné à rester au voisinage dudit dispositif et à une pluralité d'appareils périphériques destinés à être placés à poste fixe à quelque distance de la surface examinée. Le dispositif de visualisation portable permet à l'opérateur de suivre l'examen et éventuellement d'examiner plus longuement une zone douteuse. Il peut même revenir en arrière, pour un examen complémentaire après être passé sur une telle zone. Les appareils périphériques sont disposés à terre à la portée d'un autre opérateur et ils peuvent comprendre un clavier d'introduction de données, un autre dispositif de visualisation, une imprimante, une unité de mémorisation, etc...

Afin de permettre à l'opérateur actionnant manuellement le porte-sonde et le curseur de revenir en arrière au cours d'un déplacement de la sonde le long du guide, il est avantageux que les données provenant de la sonde et transmises à ladite unité de mémorisation pour un sens de déplacement soient effacées lors d'un déplacement en sens inverse de ladite sonde sur toute l'étendue dudit déplacement inverse.

Ainsi, lorsque l'opérateur, après avoir ramené la sonde en sens inverse, redéplace celle-ci dans le sens d'acquisition des données, il peut réenregistrer des données nouvelles.

Lorsque le dispositif selon l'invention est destiné à examiner des jonctions de panneaux à recouvrement comportant deux lignes parallèles de rivets, il est avantageux que le porte-sonde comporte deux sondes, dont l'une est appropriée à l'examen du panneau extérieur le long d'une desdites lignes de rivets et dont l'autre est appropriée à l'examen du panneau intérieur le long de l'autre ligne de rivets. Le porte-sondes peut être réversible pour pouvoir occuper deux positions pour lesquelles les deux sondes échangent leurs positions, de sorte que celle qui examine une ligne de rivets pour l'une des position examine l'autre ligne de rivets pour l'autre position et vice-versa.

De préférence, on prévoit des moyens pour le positionnement du guide par rapport à la jonction et des sondes par rapport aux lignes de rivets. De tels moyens peuvent être constitués de doigts prenant appui sur le bord extrême du panneau extérieur.

On voit ainsi que grâce à l'invention, on obtient un dispositif semi-automatique à commande manuelle.

Les figures du desgin annexé feront bien comprendre comment l'invention peut être réalisée.

La figure 1 montre le dispositif selon l'invention mis en place sur une portion de fuselage d'un aéronef.

La figure 2 est une vue de face, à plus grande échelle, illustrant des raccords entre les panneaux individuels de la peau d'un fuselage d'aéronef.

La figure 3 est une coupe suivant la ligne III-III de la figure 2.

La figure 4 est une vue de face agrandie montrant le porte-sondes et son montage sur la tige de guidage du dispositif.

La figure 5 est une vue de côté correspondant à la figure 4.

La figure 6 est le schéma synoptique du dispositif selon l'invention.

Sur ces figures, des références identiques désignent des éléments semblables.

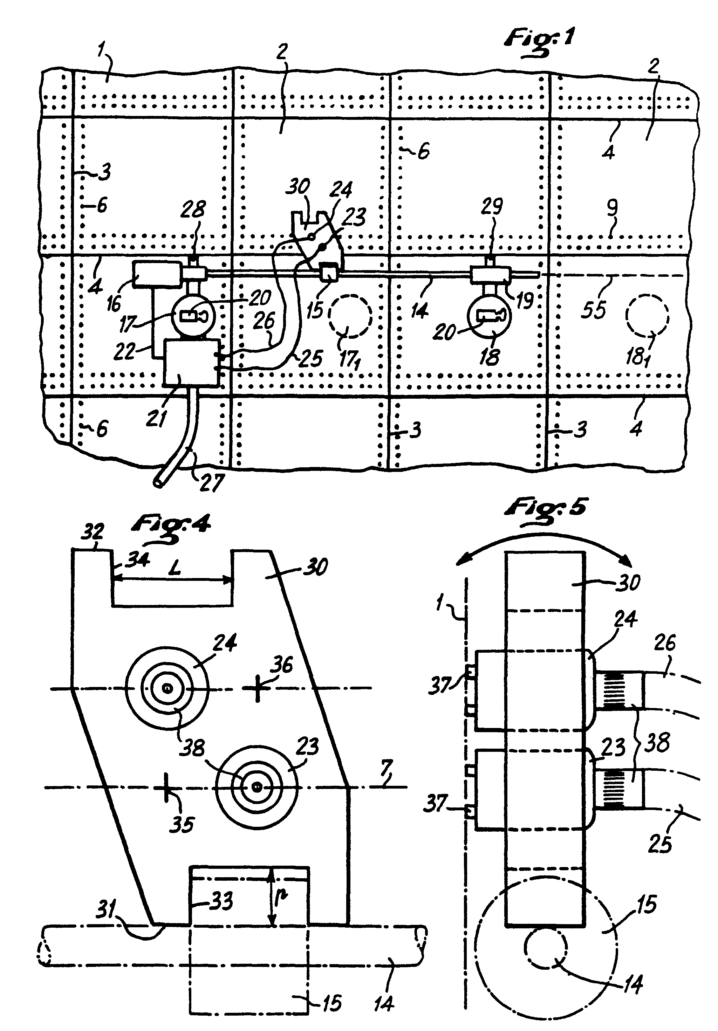

La portion 1 de peau de fuselage pour aéronef, montrée schématiquement par la figure 1, est constituée, comme cela est usuel, de panneaux individuels rectangulaires 2 assemblés les uns aux autres et définissant des lignes de jonctions transversales 3 et des lignes de jonctions longitudinales 4.

Les lignes de jonctions transversales 3 correspondent à l'emplacement des cadres (non représentés) du fuselage et on prévoit des lignes transversales 5 de rivets 6 pour assembler les bords transversadu des panneaux 2 auxdits cadres.

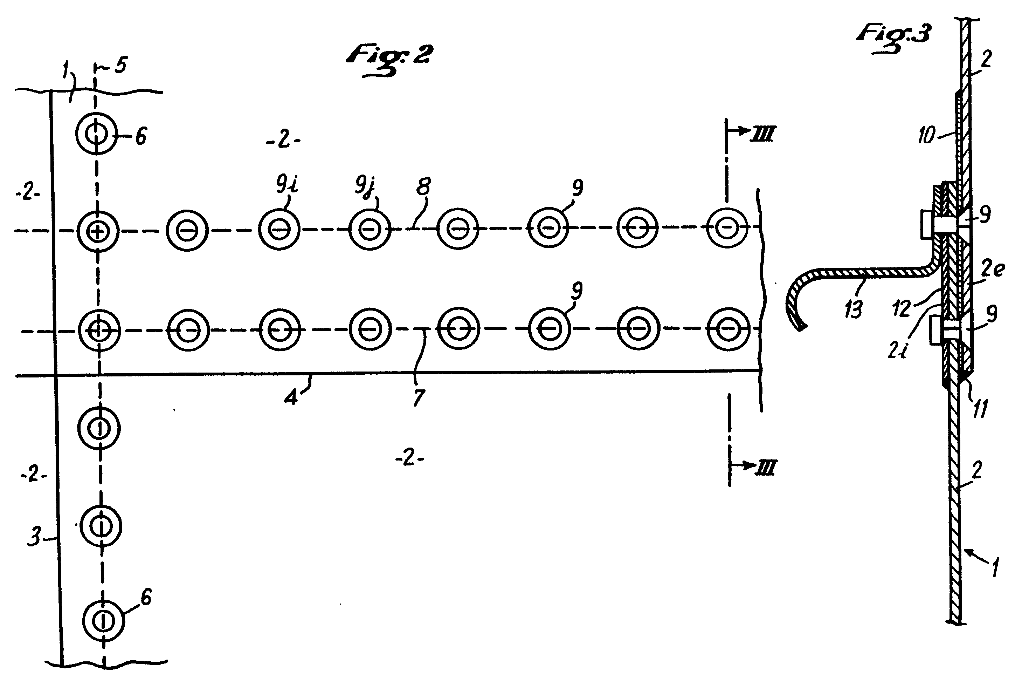

Comme le montrent bien les figures 2 et 3, les lignes de jonctions longitudinales 4 sont du type à recouvrement et les bords 2e et 2i de deux panneaux 2 adjacents se chevauchent et sont assemblés au moyen de leux lignes parallèles 7 et 8 de rivets 9. Ces bords chevauchant 2e et 2i pressent entre eux une bande d'étanchéité 10 et un joint d'étanchéité 11 est disposé entre l'extrémité (formant la ligne de jonction apparente 4) du bord extérieur 2e et la paroi extérieure du bord intérieur 2i. Des bandes et profilés de renfort 12 et 13 sont prévus du côté intérieur de la peau 1 du fuselage et sont solidarisés de celle-ci par les lignes 7 et 8 des rivets 9.

Sur la figure 1, on a représenté schématiquement le dispositif conforme à la présente invention, en cours de vérification des lignes longitudinales 7 et 8 de rivets 9 d'un panneau de peau 2. Ce dispositif comporte une tige de guidage 14, dont la longueur correspond à celle de quelques panneaux 2, par exemple à la longueur de 2 ou 3 panneaux 2, et sur laqdelle peut coulisser un curseur 15. Il comporte de plus, à une de ses extrémités, un boîtier de mesure 16, susceptible d'indiquer, à chaque instant, la position du curseur 15 le long de la tige 14. Par exemple, l'ensemble 14-15-16 est du type décrit dans le brevet US-A-3 898 555.

A cet ensemble 14-15-16 sont associées deux ventouses 17 et 18, de type connu, actionnables par un levier manuel 20. La ventouse 17 est rigidement liée au boîtier de mesure 16, tandis que la ventouse 18 est solidaire d'un coulisseau 19, pouvant glisser le long de la tige de guidage 14.

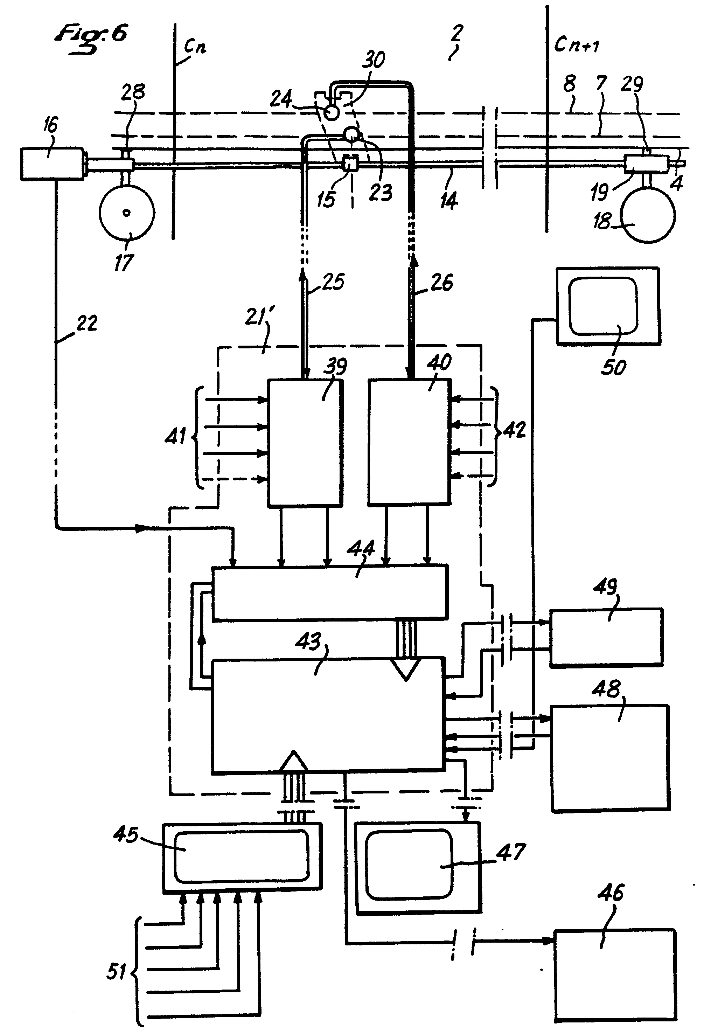

Le dispositif selon l'invention comporte de plus un boîtier de contrôle 21, solidaire de la ventouse 17 et recevant les mesures du boîtier 16, par la liaison 22 et les indications de sondes 23 et 24, par les liaisons 25 et 26. Le boîtier 21 est relié par une liaison 27 à une pluralité d'appareils périphériques, comme cela est montré par la figure 6, sur laquelle une variante de réalisation 2l' plus complète du boîtier 21 est représentée séparée de la ventouse 17.

Il va de soi, par ailleurs, qu'une partie des éléments du boîtier 21' pourrait être solidaire de l'ensemble 14-15-16 (comme le boîtier 21), le reste en étant séparé et y étant relié par la liaison 27 (comme le boîtier 21').

Des doigts 28 et 29, respectivement solidaires du boîtier 16 et du coulisseau 19, peuvent coopérer avec l'extrémité du bord extérieur 2e et/ou avec le joint 11 pour disposer la tige de guidage 14 parallèlement à la ligne de jonction 4, et donc aux lignes 7 et 8 de rivets 9, à examiner.

Les sondes 23 et 24 sont portées par un porte-sondes 30. Celui-ci est avantageusement constitué par une plaque épaisse transparente, par exemple en un composé méthacrylique, dans laquelle sont incorporées lesdites sondes. Dans deux de ses bords opposés 31 et 32, le porte-sondes 30 comporte deux échancrures identiques 33 et 34, dont la longueur L est telle qu'elles peuvent s'emboîter à frottement doux sur le curseur 15 et dont la profondeur 1 est telle que, lorsqu'elles sont emboîtées sur le curseur 15, le bord 31 (ou le bord 32) soit en appui sur la tige de guidage 14. Dans la plaque 30, les sondes 23 et 24 et les deux échancrures 33 et 34 sont décalées, parallèlement à la tige de guidage 14, de façon que, d'une part, lorsque l'échancrure 33 est emboîtée sur le curseur 15 et que le bord 31 est en appui sur la tige de guidage 14, la sonde 23 soit centrée sur le rivet 9j, de rang j, de la ligne 7, si la sonde 24 est centrée sur le rivet 9i, de rang i, de la ligne 8, et que, d'autre part, lorsque l'échancrure 34 est emboîtée sur le curseur 15 et que le bord 32 est en appui sur la tige de guidage 14; la sonde 24 soit centrée sur le rivet 9j, de la ligne 7, si la sonde 23 est centrée sur le rivet 9i de la ligne 8.

Le porte-sondes 30 comporte de plus deux réticules 35 et 36, centrés respectivement sur le rivet 9i de la ligne 7 et sur le rivet 9j, de la ligne 8, lorsque les sondes 23 et 24 sont respectivement centrés sur le rivet 9j de la ligne 7 et sur le rivet 9i de la ligne 8.

En direction de la peau 1 du fuselage, les sondes 23 et 24 sont pourvues de patins d'appui et de glissement 37, alors que du côté opposé, elles comportent des douilles 38 de raccord aux liaisons 25 et 26.

Comme le montre la figure 6, le boîtier de contrôle 21' comporte les moyens de réglage et de lecture 39 et 40, respectivement pour les sondes 23 et 24, reliés à celles-ci par les liaisons 25 et 26. Ces moyens de réglage et de lecture sont pourvus d'entrées de commande 41 et 42, respectivement. Par exemple, si les sondes 23 et 24 sont du type à courant de Foucault, les entrées de commande 41 et 42 peuvent concerner la fréquence, le gain, la phase de fonctionnement, ainsi qu'un seuil de déclenchement. De plus, le boîtier de contrôle 21 comporte un microprocesseur 43, en liaison avec les sorties desdits moyens de réglage et de lecture 39 et 40, par l'intermédiaire d'un convertisseur analogique-numérique 44. Ce dernier peut convertir également les informations provenant du boîtier de mesure 18, pour les adresser sous la forme convenable au microprocesseur 43.

Le microprocesseur 43 est par ailleurs en liaison avec un clavier 45, une imprimante 46, un appareil de visualisation 47, une unité de stockage 48, par exemple du type disque dur, une disquette de programmation 49, et un autre appareil de visualisation 50 à proximité de l'opérateur assurant le déplacement de la sonde.

Comme mentionné ci-dessus, même lorsque le boîtier de contrôle 21 est solidaire de l'ensemble comprenant les éléments 14 à 20 et 22 à 30, à cause du faible poids dudit boîtier, l'ensemble des éléments 14 à 30 est portable et peut être à la disposition d'un premier opérateur se déplaçant, d'une manière ou d'une autre, par rapport à la peau 1 du fuselage, au voisinage de celle-ci. L'appareil de visualisation 50, qui peut être également portable et de petite dimension, est également à la disposition de ce premier opérateur. En revanche, tous les autres appareils périphériques 45 à 49 peuvent être disposés loin du lieu où l'on effectue la vérification des liaisons rivetées et ils sont par exemple placés au sol, à la disposition d'un second opérateur. Les différentes connexions entre le boîtier de contrôle 2l' et les appareils périphériques 45 à 49 sont rassemblés dans la liaison 27 montrée par la figure 1.

Pour effectuer une vérification systématique de toutes les liaisons longitudinales 4 (par exemple) d'un avion, on commence par attribuer un numéro à chaque tronçon de l'avion, à chaque cadre du fuselage (correspondant aux jonctions 3) et à chaque jonction 4.

Le premier opérateur, qui se trouve à proximité d'une portion de jonction 4 à vérifier disposée entre les cadres $C_n$ et $C_{n+1}$ et qui porte l'ensemble des éléments 14 à 30 et le dispositif de visualisation 50, fixe les ventouses 17 et 18 sur la peau 1 de façon que celles-ci soient situées de part et d'autre desdits cadres et que les doigts 28 et 29 prennent appui contre le joint 11. Il est alors sûr que la tige 14 est parallèle à cette portion de jonction 4 et que les sondes 23 et 24 se trouveront respectivement en regard des lignes 7 et 8. Pendant ce temps, le second opérateur entre, par le clavier 45, différentes informations 51, telles que le numéro de l'avion, le numéro du tronçon de fuselage, les numéros des cadres limitant la portion de jonction 4, le numéro de la jonction 4, le côté (gauche ou droit) du fuselage, etc... propres à permettre l'identification de chaque tronçon de jonction.

Par les entrées 41 et 42, on règle les sondes 23 et 24, par exemple pour que la sonde 23 (ligne 7) contrôle les criques susceptibles de se produire à partir de trous de passage des rivets 9 dans le bord interne 2i et pour que la sonde 24 (ligne 8) contrôle les criques susceptibles de se produire à partir des trous de passage des rivets 9 dans le bord externe 2e. Si les sondes 23 et 24 sont des sondes à courant de Foucault, un tel réglage s'effectue par variation de frequence porteuse, puisque la profondeur de la mesure d'une telle sonde est d'autant plus grande que la fréquence de fonctionnement est plus faible. On remarquera de plus que si l'on retourne le porte-sondes 30, alors que les sondes 23 et 24 sont réglées de la façon décrite ci-dessus, le dispositif selon l'invention est alors capable de contrôler les criques susceptibles de se produire à partir des trous de passage de rivets 9 dans le bord interne 2i le long de la ligne 8 et dans le bord externe 2e le long de la ligne 7.

Le premier opérateur commence par déplacer l'ensemble curseur 15-porte-sondes 30 vers l'une des extrémités du tronçon de jonction 4 à contrôler et, à l'aide d'un des réticules 35, 36, il vise le centre d'un rivet d'extrémité 9 de façon que la sonde 23 ou 24 la plus en retrait par rapport au cadre correspondant se trouve superposée au premier des rivets 9 de la ligne 7 ou de la ligne 8 dudit tronçon. Puis, il effectue la même opération à l'autre extrémité de celui-ci. Par suite, le microprocesseur 43 reçoit du boîtier de mesure 16, les abscisses respectives de ces deux visées, et, par soustraction, il en déduit la distance séparant les cadres $C_n$ et $C_{n+1}$ et servant de fenêtre de mesure auxdites sondes 23 et 24.

Ensuite, le premier opérateur fait coulisser manuellement le porte-sondes 30 et le curseur 15 le long de la tige de guidage 14, de l'un desdits cadres $C_n$ ou $C_{n+1}$ à l'autre, en maintenant les patins de glissement 37 en appui contre la peau 1. Les sondes 23 et 24 explorent donc successivement et respectivement les lignes de rivetage 7 et 8. Par suite de la différence des matières constitutives des panneaux 2 (aluminium) et des rivets 9 (titane), à chaque fois qu'une sonde 23 ou 24 passe devant un rivet, elle émet une impulsion. Le nombre d'impulsions obtenues permet éventuellement de compter les rivets des tronçons de lignes 7 et 8 examinés.

On remarquera que par comparaison de la distance séparant les cadres $C_n$ et $C_{n+1}$ et des nombres de rivets 9, mesurés de la façon décrite ci-dessus, avec des grandeurs correspondantes emmagasinées préalablement en mémoire, le microprocesseur 43 est capable de détecter toute erreur d'identification du tronçon 4 examiné.

Par ailleurs, le premier opérateur n'a pas à s'occuper du centrage des sondes 23 et 24 par rapport aux rivets 9. Il peut donc contrôler les images apparaissant sur l'écran de l'appereil 50. Il y voit donc apparaître l'image des différents rivets du tronçon et l'image des éventuelles criques. De même, le second opérateur voit apparaître les mêmes images sur l'écran du dispositif 47. En cas d'anomalies ou d'ambiguités, le premier opérateur peut ramener en arrière le curseur 15 et le porte-sondes 30 en maintenant les patins 37 en appui sur la peau 1 pour examiner tout à loisir la zone correspondante.

Bien entendu, les informations donnant lieu aux images sur les écrans des appareils 47 et 50 sont mises en mémoire dans l'unité de stockage 48 et imprimées sur un support par l'imprimante 46.

Après avoir effectué cette série de mesures, le premier opérateur retourne éventuellement le porte-sondes 30 pour explorer avec des profondeurs différentes les lignes 7 et 8.

Lorsque l'examen à effectuer sur un tronçon de jonction 4 est terminé, le premier opérateur inhibe l'action de la ventouse 17 (par action sur le levier 20) et il peut donc coulisser l'ensemble 14 à 17 vers la ventouse 18, restant solidarisée de la peau, puisqu'alors la tige 14 peut coulisser le long de son axe 55 dans le coulisseau fixe 19. Il peut amener la ventouse libérée 17 dans la position $17_1$ (voir figure 1), puis la fixer sur la peau 1 à cette position par actionnement du levier 20. Ensuite, il actionne le levier 20 de la ventouse 18 dans le sens de la désolidarisation et il peut coulisser l'ensemble 18-19, dans le même sens que précédemment pour la ventouse 17, pour amener la ventouse 18 en position $18_1$. Le dispositif selon l'invention est alors prêt pour l'examen du panneau 2 adjacent à celui qui vient d'être examiné.

Ainsi, par rapprochements et écartements successifs des ventouses 17 et 18, il est possible de déplacer le dispositif le long de l'axe 52 de la tige de guidage 14 pour examiner la totalité de la jonction 4. Bien entendu, on veille, lors de chaque déeplacement du dispositif, à ce que les doigts 28 et 29 restent en appui contre le joint 11.

On remarquera que:
- la tige de guidage 14 a une longueur au plus égale à quelques fois la distance séparant deux cadres consécutifs, c'est-à-dire à quelques fois la longueur d'un panneau individuel 2, de sorte que le dispositif selon l'invention s'adapte particulièrement bien aux variations de courbure du fuselage et de la ligne de jonction 4, tout le long de celle-ci;

- la solidarisation du porte-sondes 30 avec le curseur 15 par simple emboîtement permet d'obtenir à la fois une grande rigidité de solidarisation entre ceux-ci parallèlement à la tige de guidage 14 et une grande liberté du porte-sondes 30 par rapport au curseur 15, transversalement à ladite tige de guidage 14; par suite, la position des sondes 23 et 24 est définie avec une grande précision, mais en cas d'aspérités sur la peau 1, le premier opérateur peut réduire sa pression manuelle sur le porte-sondes 30 pour que les patins 37 passent sans accrocher. Sur la figure 5, la liberté transversale du porte-sondes 30 par rapport au curseur 15 est indiquée par une double flèche, symbolisant la liberté de rotation dudit porte-sondes autour de son appui sur la tige de guidage 14;

- le premier opérateur peut surveiller l'examen sur son écran de contrôle 50 et, grâce à la possibilité de déplacement du porte-sondes 30, dans les deux sens, cet opérateur peut revenir en arrière afin d'examiner une zone suspecte ou dissiper une ambiguïté. Afin de ne pas enregistrer plusieurs informations pour une même abscisse le long de la tige de guidage, le microprocesseur 43 n'enregistre des informations dans sa mémoire 48 que pour un sens de déplacement du curseur 15 sur la tige 14 et efface de cette mémoire les informations déjà contenues, lorsque le curseur 15 se déplace dans le sens inverse, en correspondance avec l'amplitude dudit déplacement inverse;

- malgré sa simplicité, le dispositif selon l'invention présente un rendement élevé, permettant de diviser par un facteur 100, la durée des examens de contrôle, tout en y introduisant une grande fiabilité et reproductibilité.

Bien entendu, quoique sur les figures on ait montré une tige de guidage 14 rectiligne, il va de soi que la présente invention n'est pas limitée à cette forme. Lorsque l'on désire examiner les lignes 5 de rivets 6 parallèles aux cadres du fuselage, il est évidemment nécessaire d'utiliser un guide courbe, adapté à la section du fuselage.

**Revendications**

1. Dispositif portable pour l'examen non destructif d'une surface (1) le long d'une ligne (4), au moyen d'au moins une sonde de détection (23, 24) déplaçable le long de ladite ligne (4) et guidée par une tige de guidage (14) rapportée sur ladite surface (1) de façon amovible, ladite sonde (23, 24) étant montée dans un porte-sonde (30) lié à ladite tige de guidage (14) de façon rigide parallèlement à celle-ci et de façon lâche transversalement à ladite tige de guidage (14) et des moyens (15, 16) étant prevus pour indiquer, à chaque instant d'un déplacement dudit porte-sonde (30), le long de ladite tige de guidage (14), la position dudit porte-sonde (30) sur cette dernière, ledit dispositif comportant pour sa fixation amovible sur la surface (1) des ventouses (17, 18) commandables manuellement, et lesdits moyens (15, 16) d'indication de la position du porte-sonde (30) le long de la tige de guidage (14) comportant un curseur (15) susceptible de se déplacer librement le long de la tige de guidage (14) et fournissant une grandeur électrique représentative de la position dudit curseur le long de ladite tige de guidage (14), caractérisé en ce que au moins une ventouse (18) est montée coulissante par rapport à ladite tige de guidage (14), de façon que l'on puisse déplacer ladite tige de guidage (14) le long de ladite ligne (1), par rapprochements et écartements alternés desdites ventouses à la manière d'une chenille, l'une desdites ventouses étant fixée sur ladite surface (1) et l'autre étant désolidarisée de celle-ci au cours de chscun desdits rapprochements et écartements et en ce que ledit porte-sonde (30) est simplement emboîté sur ledit curseur (15), du fait que le porte-sonde (30) est pourvu d'un évidement (33 ou 34) s'adaptant en longueur, aux frottements près, à la longueur du curseur (15), mais permettant l'appui en pivotement dudit porte-sonde (30) sur ladite tige de guidage (14).

2. Dispositif selon la revendication 1, caractérisé en ce que le porte-sonde (30) est constitué par une plaque rigide transparente pourvue d'un réticule de visée (35 ou 36).

3. Dispositif selon l'une des revendications 1 ou 2, caractérisé en ce qu'il comporte un boîtier de contrôle (21, 21'), éventuellement en partie solidaire de ladite tige de guidage (14), pourvu de moyens de réglage et de lecture (39 ou 40) de ladite sonde (23 ou 24) et d'un microprocesseur (43), ledit boîtier de contrôle étant relié à un appareil de visualisation (50) portable destiné à rester au voisinage de l'ensemble dudit dispositif et à une plurslité d'appareils périphériques (45 à 49) destinés à être placés à poste fixe à quelque distance de la surface (1) examinée et comportant au moins une unité de mémorisation (48).

4. Dispositif selon la revendication 3, caractérisé en ce que les données provenant de la sonde (23 ou 24) et transmises à ladite unité de mémorisation (48) pour un sens de déplacement sont effacées lors d'un déplacement en sens inverse de ladite sonde, sur toute l'étendue dudit déplacement inverse.

5. Dispositif selon l'une quelconque des revendications 1 à 4, destiné à examiner des jonctions de panneaux à recouvrement comportant deux lignes (7 et 8) de rivets (9), caractérisé en ce que le porte-sonde (30) comporte deux sondes (23 et 24) dont l'une est appropriée à l'examen du panneau extérieur (2e) le long d'une desdites lignes (7 ou 8) de rivets et dont l'autre est appropriée à l'examen du panneau intérieur (2i) le long de l'autre ligne (8 ou 7) de rivets.

6. Dispositif selon ls revendicstion 5, caractérisé en ce que le porte-sonde (30) peut occuper deux positions pour lesquelles les deux sondes (23 et 24) échangent leurs positions, de sorte que celle qui examine l'une (7) desdites lignes de rivets pour l'une des positions examine l'autre (8) desdites lignes de rivets pour l'autre position et vice-versa.

7. Dispositif selon l'une des revendications 5 ou 6, caractérisé en ce qu'il comporte des moyens (28, 29) de positionnement de la tige de guidage (14) par rapport à la ligne (4) d'examen et des sondes (23 et 24) par rapport aux lignes (7 et 8) de rivets.

## Patentansprüche

1. Bewegliche Vorrichtung zum zerstörungsfreien Prüfen einer Oberfläche (1) längs einer Linie (4) mittels zumindest einer längs der Linie (4) verschiebbaren Meßsonde (23, 24), die von einem auf der Oberfläche (1) versetzten abnehmbaren Führungsstab (14) geführt und in einem Sondenträger (30) eingesetzt ist, der mit dem Führungsstab (14) parallel laufend starr und transversal zum Führungsstab (14) lose verbunden ist, und mit einer Einrichtung (15, 16), durch die zu jedem Zeitpunkt einer Verschiebung des Sondenträgers (30) längs des Führungsstabes (14) die Stellung des Sondenträgers (30) auf diesem angezeigt wird, wobei die Vorrichtung zur abnehmbaren Befestigung auf der Oberfläche (1) von Hand steuerbare Gummisauger oder Lüftungsventile (17, 18) aufweist und wobei die die Position des Sondenträggers (30) längs des Führungsstabes (14) anzeigende Einrichtung (15, 16) einen Läufer oder Reiter (15) aufweist, der längs des Führungsstabes (14) frei verschiebbar ist und eine die Stellung des Läufers längs des Führungsstabes (14) darstellende elektrische Größe liefert,
dadurch gekennzeichnet,
daß zumindest ein Gummisauger (18) gegenüber dem Führungsstab (14) gleitend montiert ist, so daß der Führungsstab (14) durch wechselweises Annähern und Abstand nehmen der Gummisauger nach Art einer Raupe längs der Linie (1) verschoben werden kann, wobei einer der Gummisauger im Laufe des jeweiligen Annäherns und Abstandnehmens auf der Oberfläche fixiert wird und der andere von ihr freikommt, und daß der Sondenträger (30) einfach am Läufer (15) eingepaßt ist, da der Sondenträger mit einer Ausnehmung (33 oder 34) versehen ist, die sich in der Länge reibungsmäßig der Länge des Läufers (15) anpaßt und dabei jedoch die Abstützung bei der Schwenkbewegung des Sondenträgers (30) auf dem Führungsstab (14) ermöglicht.

2. Vorrichtung nach Anspruch 1,
dadurch gekennzeichnet,
daß der Sondenträger (30) aus einer starren transparenten Platte gebildet ist, auf der ein Visier- oder Fadenkreuz (35 oder 36) angebracht ist.

3. Vorrichtung nach einem der vorhergehenden Ansprüche 1 oder 2,
gekennzeichnet durch
ein gegebenenfalls zum Teil mit dem Führungsstab (14) verbundenes Kontrollgehäuse (21, 21'), in dem Regel- und Ableseeinrichtungen (39 oder 40) der Sonde (23 oder 24) und ein Mikroprozessor (43) vorgesehen sind und das an ein bewegliches Sichtgerät (50), das in der Nähe der Gesamtheit der Vorrichtung zu verbleiben hat, und an periphere Geräte (45 bis 49) angeschlossen ist, die ortsfest in einer Entfernung zur untersuchten Oberfläche zu verbleiben haben und die zumindest eine Einspeicherungseinheit (48) aufweisen.

4. Vorrichtung nach Anspruch 3,
dadurch gekennzeichnet,
daß die von der Sonde (23 oder 24) stammenden und an die Einspeicherungseinheit (48) für eine Verschiebungsrichtung übertragenen Daten gelöscht werden, wenn die Verschiebung der Sonde in entgegengesetzter Richtung verläuft, und zwar auf der gesamten Strecke der entgegengesetzten Verschiebung.

5. Vorrichtung nach einem der vorhergehenden Ansprüche 1 bis 4 zur Prüfung der Verbindungsstellen von Reihen (7 und 8) von Nietungen (9) aufweisenden Abdeckplatten,
dadurch gekennzeichnet
daß der Sondenträger (30) zwei Sonden (23 und 24) aufweist, von denen die eine zweckmäßig zur Prüfung der Außenplatte (2e) längs einer der beiden Linien (7 oder 8) der Nietungen und die andere zweckmäßig zur Prüfung der Innenplatte (2i) längs der anderen Linie (8 oder 7) der Nietungen ausgebildet ist.

6. Vorrichtung nach Anspruch 5,
dadurch gekennzeichnet,
daß der Sondenträger (30) zwei Stellungen einnehmen kann, bei denen die beiden Sonden (23 und 24) ihre Positionen vertauschen, so daß diejenige, die die eine der Linien (7) der Nietungen in einer der Stellungen prüft, auch die andere Linie (8) der Nietungen in der anderen Stellung prüft und umgekehrt.

7. Vorrichtung nach einem der vorhergehenden Ansprüche 5 oder 6,
gekennzeichnet durch
eine Positionierungseinrichtung (28, 29) des Führungsstabes (14) in Bezug auf die Prüfungslinie (4) und durch Sonden- (23 und 24) in Bezug auf die Nietungslinien (7 und 8).

## Claims

1. Portable device for the non-destructive examination of a surface (1) along a line (4), by means of at least one detection probe (23, 24) displaceable along said line (4) and guided by a guide rod (14) removably fixed on said surface, said probe (23, 24) being mounted in a probe-holder (30) connected to said guide rod (14) in rigid manner parallel thereto and in loose manner transversely to said guide rod (14), and means (15, 16) being provided for indicating, at each instant of a displacement of said probe-holder (30), along said guide rod (14), the position of said probe-holder (30) on the latter, said device comprising, for its removable fixation on the surface (1), suction cups (17, 18) which are manually controllable, and said means (15, 16) for indicating the position of the probe-holder (30) along the guide rod (14) comprising a cursor (15) capable of moving freely along the guide rod (14) and furnishing an electrical magnitude representative of the position of said cursor along the guide rod (14), characterized in that at least one suction cup (18) is mounted to slide with respect to said guide rod (14), so that said guide rod (14) may be displaced along said line (1) by said suction cups moving alternately towards and away from it in the manner of caterpillar, one of said suction cups being fixed on said surface (1) and the other being disconnected therefrom in the course of each of said alternate movements, and in that said probe-holder (30) is simply fitted on said cursor, because the probe-holder (30) is provided with a recess (33 or 34) whose length matches, to within the frictions, the length of the cursor (15), but which allows said probe-holder (30) to bear pivotally on said guide rod (14).

2. Device according to claim 1, characterized in that the probe-holder (30) is constituted by a transparent rigid plate provided with a hair cross (35, or 36).

3. Device according to one of claims 1 or 2, characterized in that it comprises a monitoring box (21, 21') possibly partly fast with said guide rod (14), comprising means for adjusting and reading (39 or 40) said probe (23 or 24) and a microprocessor (43), said monitoring box being connected to a portable display apparatus (50) intended to remain in the vicinity of the whole of said device and to a plurality of peripheral apparatus (45 to 49) intended to be placed at fixed stations at some distance from the surface (1) being examined and comprising at least one memorization unit (48).

4. Device according to claim 3 characterized in that the data coming from the probe (23 or 24) and transmitted to said memorization unit (48) for one direction of displacement are erased during a displacement of said probe in opposite direction, over the whole extent of said opposite displacement.

5. Device according to any one of claims 1 to 4, adapted to examine lap joints of panels comprising two lines (7 and 8) of rivets (9), characterized in that the probe-holder (30) comprises two probes (23 and 24) of which one is adapted to examine the outer panel (2e) along one of said lines (7 or 8) of rivets and of which the other is adapted to examine the inner panel (2i) along the other line (8 or 7) of rivets.

6. Device according to claim 5, characterized in that the probe-holder (30) may occupy two positions for which the two probes (23 and 24) change their positions, so that the one which examines one (7) of said lines of rivets for one of the positions examines the other (8) of said lines of rivets for the other position, and vice versa.

7. Device according to one of claims 5 or 6, characterized in that it comprises means (28, 29) for positioning the guide rod (14) with respect to the line (4) of examination and the probes (23 and 24) with respect to the lines (7 and 8) of rivets.

*Fig.1*

*Fig.4*

*Fig.5*

Fig. 2

Fig. 3

0 117 787

Fig. 6

5